# EUROPÄISCHE PATENTSCHRIFT

(11) **EP 2 862 542 B1**
(45) Veröffentlichungstag und Bekanntmachung des Hinweises auf die Patenterteilung: **25.05.2016**
(21) Anmeldenummer: 13188761.4
(22) Anmeldetag: 15.10.2013
(51) Int. Cl.: A61C 13/265, A61C 8/00

(54) **Retentionsmatrize und Dentalimplantatsystem**
Retention matrix and dental implant system
Matrice de rétention et système d'implant dentaire

(43) Veröffentlichungstag der Anmeldung: 22.04.2015
(73) Patentinhaber: ZL Microdent-Attachment GmbH & Co. KG, 58339 Breckerfeld (DE)
(72) Erfinder: Clostermann, Volkhard-Hagen, 58097 Hagen (DE); Manke, André, 57462 Olpe (DE)
(74) Vertreter: Patentanwälte Dörner & Kötter PartG mbB

(56) Entgegenhaltungen:
- DE-A1-102011 081 214
- DE-U1- 9 419 173
- US-B1- 6 190 169

## Beschreibung

Die Erfindung betrifft eine Vorrichtung zur lösbaren Befestigung einer herausnehmbaren Zahnprothese an einem Kopfteil eines Implantats bzw. eines in einem Implantat verankerbaren Abutments nach dem Oberbegriff des Patentanspruchs 1. Die Erfindung betrifft weiterhin ein Dentalimplantatsystem nach dem Patentanspruch 9.

Zur Befestigung von herausnehmbarem Zahnersatz an Zahnimplantaten kommen sogenannte Klick- oder Kugelkopf-Dentalimplantatsysteme zum Einsatz, die eine Retentionsmatrize mit einer Aufnahme aufweisen, in der ein Retainerelement gehalten ist. Die Retentionsmatrize ist zusammen mit dem Retainerelement an einem Implantat lösbar fixierbar und wird in üblicher Weise lediglich auf das Implantat aufgeklipst. Dabei wird die Retentionsmatrize in einer Prothesenbasis der Zahnprothese unter definiertem Aufbiss einpolymerisiert, um die gewünschte Vorspannung der Zahnprothese gegen die Schleimhaut einzustellen. Die jeweilige Haltekraft der Retentionsmatrize an einem Implantat wird durch Auswahl eines in seine Bemaßung und seine Materialeigenschaften auf die jeweils gewünschte Halte- bzw. Abzugskraft ausgelegtes Retainerelements festgelegt. Jedoch können bereits kleinste Maßungenauigkeiten einer dieser Komponenten dazu führen, dass so hohe Abzugskräfte erforderlich sind, dass es dem Anwender nicht mehr möglich ist, die Prothese vom Implantat selbstständig zu entfernen. In der DE 10 2011 081 214 A1 ist daher eine Retentionsmatrize sowie ein Dentalimplantatsystem angegeben, bei der die genannten Nachteile vermieden sind. Hierzu ist ein Spannring an der Retentionsmatrize vorgesehen, der zur Verkleinerung oder Vergrößerung der Aufnahme angeordnet ist. Durch die Verkleinerung der Aufnahme kann das an der Wandung der Aufnahme anliegende Retainerelement mit einer definierbaren Vorspannung beaufschlagt beziehungsweise insgesamt radialseitig unter elastischer Verformung des Retainerelements komprimiert werden.

In der CH 380 292 A ist weiterhin eine Vorrichtung zur lösbaren Befestigung der Zahnprothese an einem Implantat beschrieben, mit einer Retentionsmatrize mit einer Aufnahme, die ein Retainerelement aufnimmt, welches entlang einer Mittelachse der Retentionsmatrize verschiebbar angeordnet ist.

US 6 190 169 B1 offenbart eine Vorrichtung nach dem Oberbegriff von Anspruch 1.

Der vorliegenden Erfindung liegt die Aufgabe zugrunde, eine Vorrichtung zur lösbaren Befestigung einer herausnehmbaren Zahnprothese an einem Kopfteil eines Implantats bzw. eines in einem Implantat verankerbaren Abutments bereitzustellen, bei der eine Feineinstellung der für ein Lösen der Retentionsmatrize von einem Implantat bzw. einem Abutment erforderlichen Abzugskraft ermöglicht ist. Gemäß der Erfindung wird die Aufgabe durch die Merkmale des kennzeichnenden Teils des Patentanspruchs 1 gelöst.

Mit der Erfindung ist eine Vorrichtung zur lösbaren Befestigung einer herausnehmbaren Zahnprothese an einem Kopfteil eines Implantats bzw. eines in einem Implantat verankerbaren Abutments bereitgestellt, bei der eine Feineinstellung der für ein Lösen der Retentionsmatrize von einem Implantat bzw. einem Abutment erforderlichen Abzugskraft ermöglicht ist. Dadurch, dass die wenigstens zwei Spannarme eine konisch sich nach außen aufweisende Mantelfläche ausbilden und dass die Aufnahme für das Retainerelement zwei Abschnitte mit unterschiedlichem Innendurchmesser aufweist, an deren Übergang die wenigstens zwei Spannarme anliegen, ist bei Verschiebung des Retainerelements entlang der Mittelachse der Retentionsmatrize eine Veränderung des radialen Abstands der Spannarme zur Mittelachse erzielt, wodurch eine Feineinstellung der Abzugskraft ermöglicht ist.

In Weiterbildung der Erfindung weisen die Spannarme des Retainerelements an ihrer der Retentionsmatrize abgewandten Innenseite eine einen Hinterschnitt ausbildende, eine negative Ausrundung ausbildende Einbuchtung auf. Hierdurch ist eine rotatorische Führung der Retentionsmatrize an einem mit der Einbuchtung korrespondierenden Abschnitt des Kopfteils eines Implantats bzw. eines in einem Implantat verankerbaren Abutments ermöglicht.

In Ausgestaltung der Erfindung ist an dem Übergang der beiden Abschnitte mit unterschiedlichem Innendurchmesser der Aufnahme der Retentionsmatrize ein zumindest bereichsweise umlaufender Steg angeformt, an dem die Spannarme des Retainerelements mit ihrer konischen Mantelfläche anliegen. Hierdurch ist eine gleitende Führung der Spannarme erzielt.

In weiterer Ausgestaltung der Erfindung weisen die Spannarme außen einen Absatz auf, der in einer Position des Retainerelements an dem zumindest bereichsweise umlaufenden Steg anliegt. Hierdurch ist eine Begrenzung einer Verschiebung des Retainerelements entlang der Mittelachse der Retentionsmatrize bewirkt.

In weiterer Ausgestaltung der Erfindung weist das Retainerelement ein Außengewinde auf, das in ein in der Aufnahme angeordnetes Innengewinde eingreift, über welches das Retainerelement durch Rotation entlang der Mittelachse der Retentionsmatrize bewegbar ist. Hierdurch ist die Feineinstellung der Abzugskraft unterstützt. In Weiterbildung der Erfindung ist in der Aufnahme der Retentionsmatrize entlang der Mittelachse ein Zylinderkörper angeformt, der axial in das Retainerelement hineinragt. Hierdurch ist ein Anschlag zur Gewährleistung einer definierten Positionierung der Retentionsmatrize auf dem Kopfteil des Implantats erzielt.

In Weiterbildung der Erfindung ist der Zylinderkörper an seinem freien Ende kuppelförmig ausgebildet. Hierdurch ist ein Verschwenken der Retentionsmatrize auf dem Kopfteil des Implantats in alle Richtungen ermöglicht, wodurch eine genaue Anpassung an die Befestigungssituation erzielt ist.

Der vorliegenden Erfindung liegt weiterhin die Aufgabe zugrunde, ein Dentalimplantatsystem, umfassend in einem Implantat verankerbares Abutment und eine auf dem Abutment befestigbare Vorrichtung der vorgenannten Art bereitzustellen, die eine Feineinstellung der zum Lösen der Retentionsmatrize von dem Abutment erforderlichen Abzugskraft ermöglicht. Gemäß der Erfindung wird diese Aufgabe durch ein Dentalimplantatsystem mit den Merkmalen des Patentanspruchs 9 gelöst.

Mit der Erfindung ist ein Dentalimplantatsystem, umfassend ein in einem Implantat verankerbares Abutment und eine auf dem Abutment befestigbare Vorrichtung der vorgenannten Art bereit gestellt, bei der eine Feineinstellung der für ein Lösen der Retentionsmatrize von dem Abutment erforderlichen Abzugskraft ermöglicht ist. Die Spannarme nehmen mit ihrer eine negative Ausrundung ausbildenden Einbuchtung den durchmessererweiterten, umlaufend abgerundeten Abschnitt des Kopfteils des Abutments auf, wodurch eine gute Drehführung erzielt ist. Dabei liegen die Spannarme endseitig an dem zylindrischen Abschnitt an, wodurch weiterhin eine gute Abstützung bewirkt ist. Eine weitere Fixierung ist dadurch erzielt, dass der in den Spannarmen angeordnete Hinterschnitt den in dem Kopfteil des Abutments angeordneten Hinterschnitt im montierten Zustand der Retentionsmatrize hintergreifen.

In Weiterbildung der Erfindung weist das Kopfteil des Abutments an seiner dem abgerundeten Abschnitt gegenüberliegenden Seite des zylindrischen Abschnitts einen durchmessererweiterten Kragen auf, dessen Außendurchmesser im Wesentlichen dem endseitigen Innendurchmesser der auf diesem angebrachten Retentionsmatrize entspricht. Hierdurch ist ein axialer Anschlag für das Retentionsteil an dem Kopfteil des Implantats erzielt.

In Weiterbildung der Erfindung ist der Übergang von dem zylindrischen Abschnitt des Kopfteils zum durchmessererweiterten Kragen durch einen Radius gebildet, wobei die Spannarme endseitig mit diesem Radius korrespondierend abgerundet ausgebildet sind, an dem sie in einer axialen Endlage des Retainerelements anliegen. Hierdurch ist ein sanfter Anschlag bewirkt.

Bevorzugt ist an dem Kopfteil des Abutments ein durchmesserverminderter Abschnitt angeformt, der mit einem Außenvielkantprofil, bevorzugt einem Außensechskantprofil versehen ist. Hierdurch ist eine druckfeste Verankerung des Abutments in einem Implantat ermöglicht. Bei einteiliger Implantatgestaltung kann an Stelle des als Ankerstück fungierenden durchmesserverminderten Abschnitts auch ein Implantatkörper angeformt sein, wie es beispielsweise in der DE 2011 081 214 A1 gezeigt ist. In diesem Fall ist das Abutment Teil des Implantatkörpers.

Andere Weiterbildungen und Ausgestaltungen der Erfindung sind in den übrigen Unteransprüchen angegeben. Ein Ausführungsbeispiel der Erfindung ist in den Zeichnungen dargestellt und wird nachfolgend im Einzelnen beschrieben. Es zeigen:

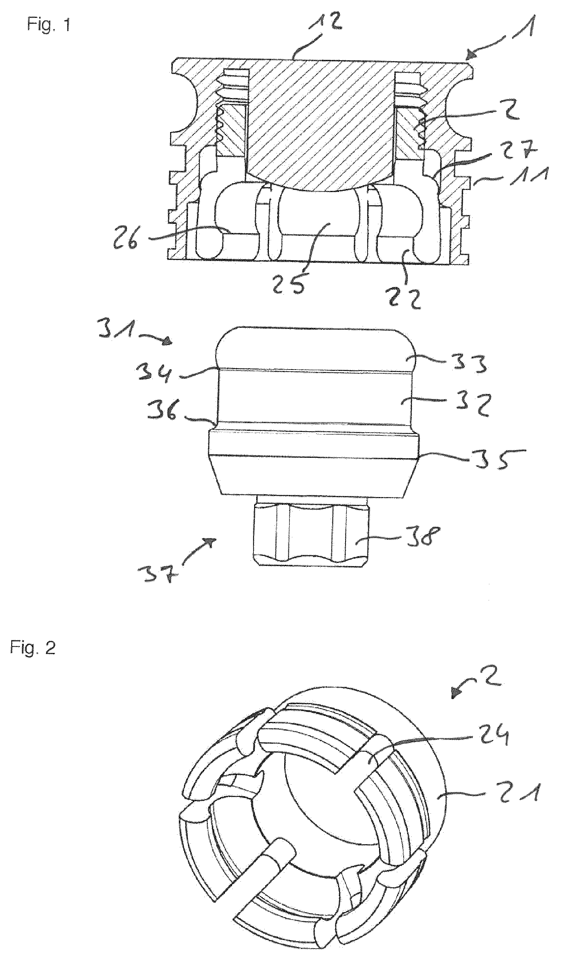

- Figur 1: die schematische Darstellung einer ein Retainerelement aufnehmenden Retentionsmatrize mit angestelltem Kopfteil eines Implantats;
- Figur 2: die räumliche Darstellung des Retainerelements der Anordnung aus Figur 1;

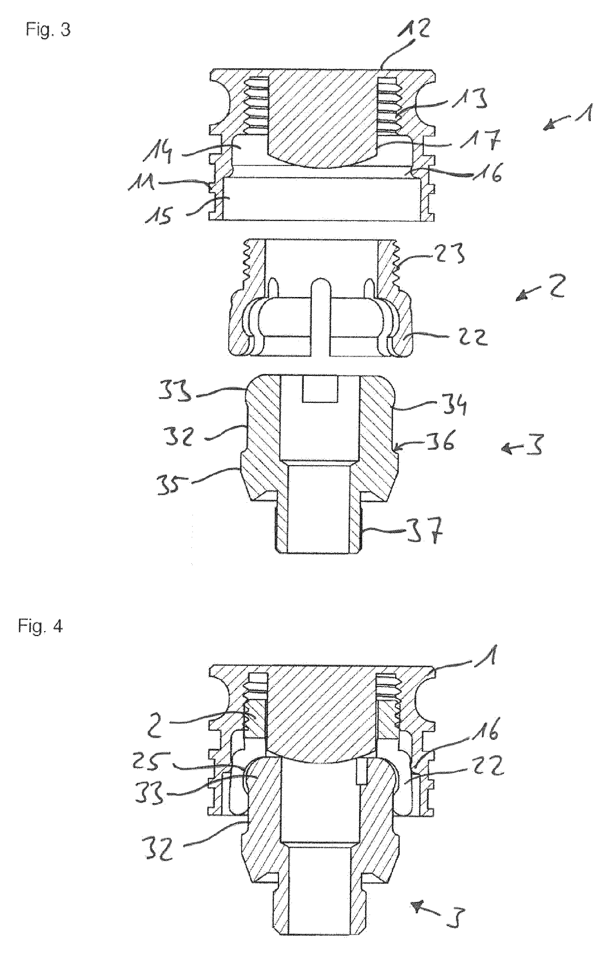

- Figur 3: die schematische Darstellung eines Dentalimplantatsystems in Explosionsdarstellung im Längsschnitt und
- Figur 4: die Darstellung des Dentalimplantatsystems aus Figur 3 in montiertem Zustand im Längsschnitt.

Die als Ausführungsbeispiel gewählte Vorrichtung besteht aus einer einteiligen Retentionsmatrize 1, die ein ebenfalls einteilig ausgebildetes Retainerelement 2 aufnimmt. Zusammen mit einem in einem - nicht dargestellten - Implantat verankerbaren Abutment 3 bildet diese Vorrichtung ein Dentalimplantatsystem aus.

Die Retentionsmatrize 1 ist im Ausführungsbeispiel als topfartiges Titanteil ausgebildet. Außen umlaufend sind an der Retentionsmatrize 1 Rippen 11 zur Verankerung in einer - nicht dargestellten - Zahnprothese angeformt. An ihrem dem Boden 12 zugewandten Ende ist in der Retentionsmatrize 1 innen ein Innengewinde 13 eingebracht, an das sich ein erster zylindrischer Abschnitt 14 anschließt, der in einen zweiten, gegenüber dem ersten Abschnitt 14 durchmesservergrößert ausgebildeten zweiten zylindrischen Abschnitt 15 übergeht. An den Übergang zwischen dem ersten zylindrischen Abschnitt 14 und dem zweiten zylindrischen 15 ist umlaufend ein abgerundeter Steg 16 angeformt. Mittig ist entlang der Mittelachse der Retentionsmatrize 1 an dem Boden 12 ein Zylinderkörper 17 angeformt, dessen freies Ende kuppelförmig ausgebildet ist. Der Zylinderkörper 17 ragt in den ersten zylindrischen Abschnitt 14 der Retentionsmatrize 1 hinein, wobei der Mittelpunkt des kuppelförmigen Endes des Zylinderkörpers 17 etwa in Höhe des umlaufenden Steges 16 angeordnet ist. Der so ausgebildete Innenraum bildet eine Aufnahme für das Retainerelement 2.

Das Retainerelement 2 ist im Ausführungsbeispiel als einteiliges Kunststoffteil ausgebildet. Es besteht im Wesentlichen aus einem kreisringförmigen Basisteil 21, an dem umlaufend gleichmäßig sechs Spannarme 22 angeformt sind. Das Basisteil 21 ist außen mit einem Außengewinde 23 versehen, das in das Innengewinde 13 der Retentionsmatrize 1 einschraubbar ist.

Die Spannarme 22 sind zueinander identisch ausgebildet und sind durch Schlitze 24 voneinander getrennt, welche in das Basisteil 21 hineinragen. Die umlaufend angeordneten Spannarme 22 bilden außen umlaufend eine konisch sich nach außen aufweitende Mantelfläche aus, deren kleinster Durchmesser gegenüber dem Durchmesser des Basisteils 21 vergrößert ist, wobei die Spannarme 22 radial nach außen versetzt an dem Basisteil 21 angeformt sind. Hierdurch ist ein Absatz 27 gebildet, der im Ausführungsbeispiel abgerundet ausgebildet ist. An ihrer der Retentionsmatrize 1 abgewandten Innenseite sind die Spannarme 22 mit einer eine negative Ausrundung ausbildenden Einbuchtung 25 versehen, durch die ein Hinterschnitt 26 ausgebildet ist. Endseitig sind die Spannarme 22 abgerundet ausgebildet.

Das Abutment 3 weist an seinem oberen Ende ein Kopfteil 31 auf, mit einem zylindrischen Abschnitt 32, der endseitig in einen durchmessererweiterten, umlaufend abgerundeten Abschnitt 33 übergeht, wodurch ein Hinterschnitt 34 gebildet ist. An seiner dem abgerundeten Abschnitt 33 gegenüberliegenden Seite des zylindrischen Abschnitts 32 weist das Kopfteil 31 einen gegenüber dem zylindrischen Abschnitt 32 wiederum durchmessererweiterten Kragen 35 auf, dessen Außendurchmesser im Wesentlichen dem Innendurchmesser des zweiten zylindrischen Abschnitts 15 der Retentionsmatrize 1 entspricht. Dabei ist der Übergang von dem zylindrischen Abschnitt 32 des Kopfteils 31 zum durchmessererweiterten Kragen 35 durch einen Radius 36 gebildet, der mit dem Radius der abgerundeten Enden der Spannarme 22 korrespondiert. An seiner dem abgerundeten Abschnitt gegenüberliegenden Ende ist der Kragen 35 konisch zulaufend ausgebildet.

An dem Kopfteil 31 des Implantats 3 ist ein Ankerstück 37 angeformt, das umlaufend mit einem Sechskantprofil 38 versehen ist. Das Ankerstück 37 ist in bekannter Art und Weise in einem - nicht dargestellten - mit einem Außengewinde versehenen Implantatkörper verankerbar. Der Einsatz eines solchen Abutments erweist sich als sehr flexibel, da es in Implantaten unterschiedlichster Ausgestaltungen verankerbar ist.

Das Retainerelement 2 ist mit dem Außengewinde 23 des Basisteils 21 in das Innengewinde 13 der Retentionsmatrize eingeschraubt. Dabei liegen die Spannarme 22 des Retainerelements 2 an dem umlaufenden Steg 16 der Retentionsmatrize 1 an. Wird die Retentionsmatrize 1 auf das Kopfteil 31 des Implantats 3 aufgesteckt, werden die Enden der Spannarme 22 oberhalb des Steges 16 der Retentionsmatrize 1 elastisch nach außen bewegt, bis der abgerundete Abschnitt 33 des Kopfteils 1 in die Einbuchtungen 25 der Spannarme 21 eingleitet. Der Zylinderkörper 17 liegt dabei auf der ebenen Oberfläche des Kopfteils 31 des Abutments 3 auf, wodurch eine definierte axiale Position der Retentionsmatrize 1 auf dem Abutment 3 erzielt ist. Die Retentionsmatrize ist nun drehbar auf dem Kopfteil 31 des Abutments 3 gehalten. Durch Drehen der Retentionsmatrize 1 relativ zum Retainerelement 2 wird dieses axial in dem Kopfteil 31 entgegengesetzter Richtung bewegt, wodurch die Spannarme 22 entlang dem Steg 16 gleiten und aufgrund ihrer konischen Ausbildung in Richtung der Mittelachse der Retentionsmatrize 1 bewegt werden. Hierdurch wird die Abzugskraft erhöht. Dabei gleiten die Spannarme 21 entlang der ebenen Fläche des zylindrischen Abschnitts 32. In Endstellung des Retainerelements mit maximaler Abzugskraft greift der Hinterschnitt 26 der Spannarme 21 in den Hinterschnitt 34 des Kopfteils 31 ein.

## Patentansprüche

1. Vorrichtung zur lösbaren Befestigung einer herausnehmbaren Zahnprothese an einem Kopfteil eines Implantats bzw. eines in einem Implantat verankerbaren Abutments, umfassend eine Retentionsmatrize (1) mit einer Aufnahme, die ein wenigstens zwei Spannarme (22) aufweisendes, kreisringförmiges Retainerelement (2) aufnimmt, welches entlang einer Mittelachse der Retentionsmatrize (1) verschiebbar angeordnet ist, wobei das Retainerelement (2) ein Außengewinde (23) aufweist, das in ein in der Aufnahme angeordnetes Innengewinde (13) eingreift, über welches das Retainerelement (2) durch Rotation entlang der Mittelachse der Retentionsmatrize (1) bewegbar ist, **dadurch gekennzeichnet, dass** die wenigstens zwei Spannarme (22) eine konisch sich nach außen aufweitende Mantelfläche ausbilden und dass die Aufnahme für das Retainerelement (2) beabstandet zu dem Innengewinde (13) zwei Abschnitte (14, 15) mit unterschiedlichem Innendurchmesser aufweist, an deren Übergang die wenigstens zwei Spannarme (22) anliegen.

2. Vorrichtung nach Anspruch 1, **dadurch gekennzeichnet, dass** die Spannarme (22) des Retainerelements (2) an ihrer der Retentionsmatrize (1) abgewandten Innenseite eine einen Hinterschnitt (26) bildende, eine negative Ausrundung ausbildende Einbuchtung (25) aufweisen.

3. Vorrichtung nach Anspruch 1 oder 2, **dadurch gekennzeichnet, dass** an dem Übergang der beiden Abschnitte (14,15) mit unterschiedlichem Innendurchmesser der Retentionsmatrize (1) ein zumindest bereichsweise umlaufender Steg (16) angeformt ist, an dem die Spannarme (22) mit ihrer konischen Mantelfläche anliegen.

4. Vorrichtung nach Anspruch 3, **dadurch gekennzeichnet, dass** die Spannarme (22) außen einen Absatz (27) aufweisen, der in einer Position des Retainerelements (2) an dem zumindest bereichsweise umlaufenden Steg (16) anliegt.

5. Vorrichtung nach einem der vorgenannten Ansprüche, **dadurch gekennzeichnet, dass** in der Aufnahme der Retentionsmatritze (1) entlang der Mittelachse ein Zylinderkörper (17) angeformt ist, der axial in das Retainerelement (2) hineinragt.

6. Vorrichtung nach Anspruch 5, **dadurch gekennzeichnet, dass** der Zylinderkörper (17) an seinem freien Ende kuppelförmig ausgebildet ist.

7. Vorrichtung nach einem der vorgenannten Ansprüche, **dadurch gekennzeichnet, dass** das Retainerelement (2) aus einem mundbeständigem Edelmetall oder aus Titan/Titanlegierung oder mundbeständigem Kunststoff hergestellt ist.

8. Dentalimplantatsystem, umfassend ein in einem Implantat verankerbares Abutment (3) und eine auf dem Abutment (3) befestigbare Vorrichtung nach einem der vorgenannten Ansprüche, **dadurch gekennzeichnet, dass** an dem Abutment (3) endseitig ein Kopfteil (31) angeformt ist, das einen zylindrischen Abschnitt (32) aufweist, der endseitig in einen durchmessererweiterten, umlaufend abgerundeten Abschnitt (33) übergeht, wodurch ein Hinterschnitt (26) gebildet ist, wobei die Einbuchtung (25) der Spannarme (22) mit der Außenkontur des Kopfteils (31) des Implantats (3) korrespondiert, dessen Hinterschnitt (34) die Spannarme (22) im montierten Zustand der Retentionsmatrize (1) hintergreifen.

9. Dentalimplantatsystem nach Anspruch 8, **dadurch gekennzeichnet, dass** das Kopfteil (31) des Abutments (3) an seiner dem abgerundeten Abschnitt (33) gegenüber liegenden Seite des zylindrischen Abschnitts (32) einen durchmessererweiterten Kragen (35) aufweist, dessen Außendurchmesser im Wesentlichen dem endseitigen Innendurchmesser der auf diesem aufgebrachten Retentionsmatrize (1) entspricht.

10. Dentalimplantatsystem nach Anspruch 9, **dadurch gekennzeichnet, dass** der Übergang von dem zylindrischen Abschnitt (32) des Kopfteils (31) zum durchmessererweiterten Kragen (35) durch einen Radius (36) gebildet ist, wobei die Spannarme (22) endseitig mit diesem Radius (36) korrespondierend abgerundet ausgebildet sind, an welchem Radius (36) sie in einer axialen Endlage des Retainerelements (2) anliegen.

11. Dentalimplantatsystem nach einem der Ansprüche 8 bis 10, **dadurch gekennzeichnet, dass** an dem Kopfteil (31) des Abutments (3) ein Ankerstück (37) angeformt ist, das mit einem Vielkantprofil, bevorzugt einem Sechskantprofil (38) versehen ist.

## Claims

1. Apparatus for releasable fixing of a removable dental prosthesis at a head part of an implant or of an abutment anchorable in an implant comprising a retention matrix (1) having a receptacle, which receives an annular retainer element (2) having at least two tensioning arms (22), which is movably arranged along a centre axis of the retention matrix (1), wherein the retainer element (2) has an outer thread (23), which engages in an inner thread (13) arranged in the receptacle, via which the retainer element (2) is movable by rotation along the centre axis of the retention matrix (1), **characterised in that** the at least two tensioning arms (22) form a conically outwardly flared surface area and that the receptacle has two sections (14, 15) with a different inner diameter for the retainer element (2) at a distance to the inner thread (13), against the transitions of which the at least two tensioning arms (22) abut.

2. Apparatus according to claim 1, **characterised in that** the tensioning arms (22) of the retainer element (2) have an indentation (25) at their inner side facing away from the retention matrix (1) forming an undercut (26), forming a negative rounding.

3. Apparatus according to claim 1 or 2, **characterised in that** an at least partially circumferential web (16) is moulded to the transition of the two sections (14, 15) with a different inner diameter of the retention matrix (1), against which the tensioning arms (22) abut with their conical surface area.

4. Apparatus according to claim 3, **characterised in that** the tensioning arms (22) have a shoulder (27) outside, which abuts against the at least partially circumferential web (16) in one position of the retainer element (2).

5. Apparatus according to one of the previous claims, **characterised in that** a cylinder body (17) is moulded in the receptacle of the retention matrix (1) along the centre axis, which axially protrudes into the retainer element (2).

6. Apparatus according to claim 5, **characterised in that** the cylinder body (17) is dome-shaped at its free end.

7. Apparatus according to one of the previous claims, **characterised in that** the retainer element (2) is made of a mouth-resistant precious metal or from titanium/titanium alloy or mouth-resistant plastic.

8. Dental implant system comprising an abutment (3) anchorable in an implant and an apparatus fixable on the abutment (3) according to one of the previous claims, **characterised in that** a head part (31) is moulded to the abutment (3) at its end, which has a cylindrical section (32), which at its end merges into a diameter-expanded, circumferentially rounded section (33), whereby an undercut (26) is formed, wherein the indentation (25) of the tensioning arms (22) corresponds with the outer contour of the head part (31) of the implant (3), behind the undercut (34) of which the tensioning arms (22) engage in a mounted state of the retention matrix (1).

9. Dental implant system according to claim 8, **characterised in that** the head part (31) of the abutment (3) has a diameter-expanded collar (35) at its side opposite the rounded section (33) of the cylindrical section (32), the outer diameter of which substantially corresponds to the end-side inner diameter of the retention matrix (1) mounted on same.

10. Dental implant system according to claim 9, **characterised in that** the transition from the cylindrical section (32) of the head part (31) to the diameter-expanded collar (35) is formed by a radius (36), wherein the tensioning arms (22) at the end are rounded corresponding with this radius (36), against which radius (36) they abut in an axial end position of the retainer element (2).

11. Dental implant system according to one of claims 8 to 10, **characterised in that** an anchor piece (37) is moulded to the head piece (31) of the abutment (3), which is provided with a polygon profile, preferably a hexagonal profile (38).

## Revendications

1. Dispositif permettant la fixation, détachable, d'une prothèse dentaire amovible contre la pièce têtière d'un implant et/ou d'un pilier ancrable dans un implant, comprenant une matrice de rétention (1) dotée d'un réceptacle recevant un élément de retenue (2) de forme annulaire circulaire présentant au moins deux bras de serrage (22), élément de retenue qui est agencé de façon déplaçable le long d'un axe médian de la matrice de rétention (1), sachant que l'élément de retenue (2) présente un filetage externe (23) engrenant dans un taraudage (13) agencé dans le réceptacle, taraudage via lequel l'élément de retenue (2) est déplaçable par rotation le long de l'axe médian de la matrice de rétention (1), **caractérisé en ce qu'**au moins les deux bras de serrage (22) forment une surface enveloppante s'évasant en direction de l'extérieur et que le réceptacle de l'élément de retenue (2) présente, à une certaine distance du taraudage (13), deux segments (14, 15) d'un diamètre intérieur différent, contre la transition desquels appliquent au moins les deux bras de serrage (22).

2. Dispositif selon la revendication 1, **caractérisé en ce que** les bras de serrage (22) de l'élément de retenue (2) présentent, sur leur côté intérieur ne regardant pas la matrice de rétention (1), un creux (25) formant une contre-dépouille (26) et configurant une concavité.

3. Dispositif selon la revendication 1 ou 2, **caractérisé en ce qu'**au niveau de la transition des deux segments (14, 15) où la matrice de rétention (1) présente un diamètre intérieur différent, une nervure (16) au moins localement périphérique est modelée, contre laquelle les bras de serrage (22) appliquent par leur surface enveloppante conique.

4. Dispositif selon la revendication 3, **caractérisé en ce que** les bras de serrage (22) présentent à l'extérieur un talon (27) qui dans une position de l'élément de retenue (2) applique contre la nervure (16) au moins localement périphérique.

5. Dispositif selon l'une des revendications précédentes, **caractérisé en ce que** dans le réceptacle de la matrice de rétention (1), le long de l'axe médian, est modelé un corps cylindrique (17) qui fait saillie axialement dans l'élément de retenue (2).

6. Dispositif selon la revendication 5, **caractérisé en ce que** le corps cylindrique (17) est configuré en forme de coupole à son extrémité libre.

7. Dispositif selon l'une des revendications précédentes, **caractérisé en ce que** l'élément de retenue (2) est fabriqué dans un métal précieux résistant à l'environnement buccal ou en titane/alliage de titane, ou en matière plastique résistante à l'environnement buccal.

8. Système d'implant dentaire comprenant un pilier (3) ancrable dans un implant et un dispositif fixable sur le pilier (3) selon l'une des revendications précédentes, **caractérisé en ce que** contre l'extrémité du pilier (3) est modelée une pièce têtière (31) présentant un segment (32) cylindrique qui à l'extrémité devient un segment (33) arrondi périphériquement et d'un diamètre accru, faisant qu'est formée une contre-dépouille (26), sachant que le creux (25) des bras de serrage (22) épouse le contour extérieur de la pièce têtière (31) de l'implant (3), dont la contre-dépouille (34) est saisie par derrière par les bras de serrage (22) lorsque la matrice de rétention (1) est à l'état monté.

9. Système d'implant dentaire selon la revendication 8, **caractérisé en ce que** la pièce têtière (31) du pilier (3) présente un col (35) d'un diamètre accru sur le côté du segment (32) cylindrique situé en face du segment arrondi (33), col dont le diamètre extérieur correspond pour l'essentiel au diamètre intérieur terminal de la matrice de rétention (1) montée sur lui.

10. Système d'implant dentaire selon la revendication 9, **caractérisé en ce que** la transition entre le segment (32) cylindrique de la pièce têtière (31) et le col (35) d'un diamètre accru est formée par un rayon (36), sachant que les bras de serrage (22) sont configurés arrondis à l'extrémité pour épouser ce rayon (36), rayon (36) contre lequel ils appliquent dans une position axiale finale de l'élément de retenue (2).

11. Système d'implant dentaire selon l'une des revendications 8 à 10, **caractérisé en ce que** contre la pièce têtière (31) du pilier (3) est modelée une pièce d'ancrage (37) présentant un profil carré et de préférence un profil hexagonal (38).
